# EUROPEAN PATENT APPLICATION

(11) **EP 4 800 842 A2**
(43) Date of publication of application: **02.09.2026**
(21) Application number: 26191959.1
(22) Date of filing: 08.10.2021
(51) Int. Cl.: H01Q 9/30

(54) **HEAD MOUNTED DISPLAY**

(30) Priority: 08.10.2020 JP 2020170671
(62) Document number(s) of the earlier application(s) in accordance with Art. 76 EPC: 21877762.1 / 4 228 249
(71) Applicant: Dai Nippon Printing Co., Ltd., Tokyo 162-8001 (JP)
(72) Inventor: KAWAGUCHI, Shuji, Tokyo, 162-8001 (JP)
(74) Representative: Müller-Boré & Partner Patentanwälte PartG mbB

(57) **Abstract**

A head mounted display (90) includes a frame (91) and a transparent display device (95) mounted to the frame (91). The display device (95) includes a first base substrate (96), a wiring board (10) provided on the first base substrate (96), and a display unit (97) provided between the first base substrate (96) and the wiring board (10). The wiring board (10) includes a substrate (11) that has transparency, and a wiring pattern area (20) that is arranged on the substrate (11) and includes pieces of wiring (21). The minimum distance (D) between the wiring pattern area (20) and the display unit (97) is 0.1 mm or greater

## Description

### Technical Field

An embodiment of the present disclosure relates to a head mounted display.

### Background Art

Nowadays, transmissive-type head mounted displays have been developed (for example, see PTL 1). A transmissive-type head mounted display is a device that additionally displays various kinds of information on actual scenery which the user wearing the device on the head sees, by using, for example, a technique called augmented reality (AR).

### Citation List

### Patent Literature

[Patent Literature 1]: Japanese Unexamined Patent Application Publication No. 2015-191026

By the way, for the purpose of obtaining various kinds of information, a head mounted display could be equipped with an antenna, etc. for communication with an external communication device. Since this could make a head mounted display heavy, reducing the size and weight of the head mounted display is demanded. In addition, higher radio sensitivity is demanded when an antenna, etc. is mounted on the head mounted display.

One of objects of the present embodiment is to provide a head mounted display that enables a reduction in size and weight and an improvement in radio sensitivity.

### Summary of Invention

A head mounted display according to an embodiment of the present disclosure is a head mounted display that includes: a frame; and a display device mounted to the frame, the display device being transparent and including a first base substrate, a wiring board provided on the first base substrate, and a display unit provided between the first base substrate and the wiring board, the wiring board including a substrate having transparency, and a wiring pattern area arranged on the substrate and including pieces of wiring.

In the head mounted display according to an embodiment of the present disclosure, the display device may further include a second base substrate provided on the wiring board and, with the first base substrate, sandwiching the wiring board therebetween.

In the head mounted display according to an embodiment of the present disclosure, the wiring pattern area and the display unit may be shifted in position from each other when viewed in a thickness direction of the substrate.

In the head mounted display according to an embodiment of the present disclosure, the wiring pattern area may be provided at a position closer to the frame than the display unit is.

In the head mounted display according to an embodiment of the present disclosure, the wiring pattern area may have at least one of a radio-wave transmitting-and-receiving function, a gesture sensing function, a wireless power feeding function, and an anti-fog function.

In the head mounted display according to an embodiment of the present disclosure, each as the wiring pattern area, a plurality of wiring pattern areas may exist on the substrate, and the wiring pattern areas may have functions different from one another.

In the head mounted display according to an embodiment of the present disclosure, at least a part of the pieces of wiring may be arranged irregularly.

In the head mounted display according to an embodiment of the present disclosure, the substrate may include glass or a resin film.

In the head mounted display according to an embodiment of the present disclosure, the wiring board may further include a dummy pattern area that is located around the wiring pattern area and is electrically independent of the wiring.

In the head mounted display according to an embodiment of the present disclosure, the wiring pattern area may have a sheet resistance value of 5 ohms per square or less, and a maximum width may be 3 µm or less when each of the pieces of wiring is viewed at a viewing angle of 120°.

The embodiment of the present disclosure makes it possible to reduce the size and weight of a head mounted display and improve its radio sensitivity.

### Brief Description of Drawings

[Fig. 1] Fig. 1 is a perspective view of a head mounted display according to an embodiment.
[Fig. 2] Fig. 2 is a front view of a head mounted display according to an embodiment (a diagram as viewed from a direction indicated by an arrow II in Fig. 1).
[Fig. 3] Fig. 3 is a cross-sectional view of a display device of a head mounted display according to an embodiment (a cross-sectional view taken along the line III-III in Fig. 2).
[Fig. 4] Fig. 4 is an enlarged plan view of a wiring board (an enlarged view of a part IV in Fig. 2).
[Fig. 5] Fig. 5 is an enlarged plan view of a wiring board (an enlarged view of a part V in Fig. 4).
[Fig. 6] Fig. 6 is a cross-sectional view of a wiring board (a cross-sectional view taken along the line VI-VI in Fig. 5).
[Fig. 7] Fig. 7 is a cross-sectional view of a wiring board (a cross-sectional view taken along the line VII-VII in Fig. 5).
[Fig. 8] Fig. 8 is a cross-sectional view of antenna wiring and antenna interconnection wiring of a wiring board.
[Fig. 9] Fig. 9 is a graph illustrating a simulation result of a relationship between sheet resistance and radiation efficiency.
[Fig. 10] Fig. 10 is a perspective view of an antenna pattern area of a wiring board.
[Fig. 11] Fig. 11 is a cross-sectional view of antenna wiring and antenna interconnection wiring of a wiring board.
[Fig. 12] Fig. 12 is a cross-sectional view of a wiring board (a cross-sectional view taken along the line XII-XII in Fig. 5).
[Fig. 13A] Fig. 13A is a cross-sectional view illustrating a method of manufacturing a wiring board of a head mounted display according to an embodiment.
[Fig. 13B] Fig. 13B is a cross-sectional view illustrating the method of manufacturing a wiring board of a head mounted display according to an embodiment.
[Fig. 13C] Fig. 13C is a cross-sectional view illustrating the method of manufacturing a wiring board of a head mounted display according to an embodiment.
[Fig. 13D] Fig. 13D is a cross-sectional view illustrating the method of manufacturing a wiring board of a head mounted display according to an embodiment.
[Fig. 13E] Fig. 13E is a cross-sectional view illustrating the method of manufacturing a wiring board of a head mounted display according to an embodiment.
[Fig. 13F] Fig. 13F is a cross-sectional view illustrating the method of manufacturing a wiring board of a head mounted display according to an embodiment.
[Fig. 14] Fig. 14 is a cross-sectional view of a head mounted display according to a modification example of an embodiment (a diagram corresponding to Fig. 3).
[Fig. 15] Fig. 15 is a front view of a head mounted display according to a modification example of an embodiment (a diagram corresponding to Fig. 2).
[Fig. 16] Fig. 16 is an enlarged plan view of a head mounted display according to a modification example of an embodiment (a diagram corresponding to Fig. 5).
[Fig. 17] Fig. 17 is a front view of a head mounted display according to a modification example of an embodiment (a diagram corresponding to Fig. 2).
[Fig. 18] Fig. 18 is a front view of a head mounted display according to a modification example of an embodiment (a diagram corresponding to Fig. 2).

### Description of Embodiments

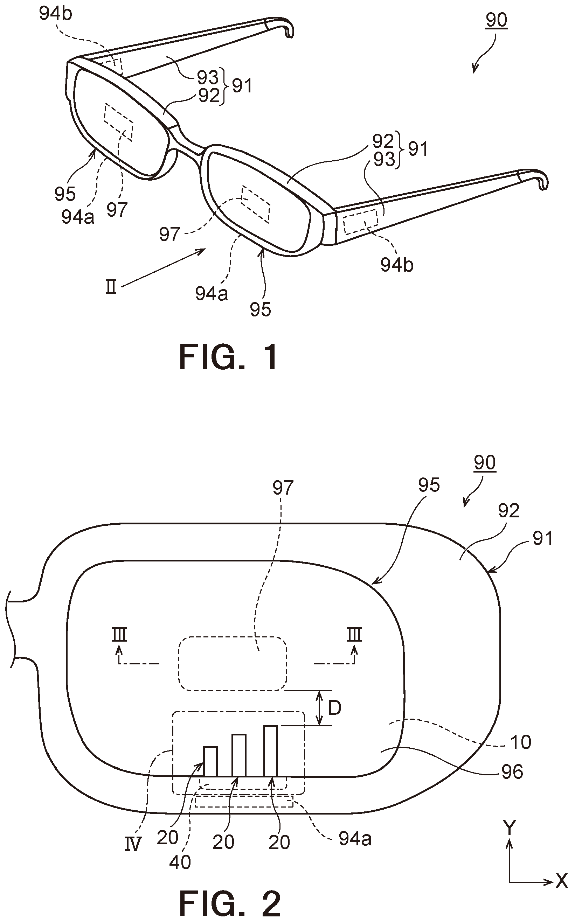

First, with reference to Figs. 1 to 13F, an embodiment will now be described. Figs. 1 to 13F illustrate the embodiment.

The drawings mentioned below are schematic. Therefore, the illustration will be exaggerated where appropriate in order to facilitate understanding of sizes/shapes of portions. Modifications can be made as appropriate within a range of not departing from the technical idea. In the drawings mentioned below, the same reference signs will be assigned to the same portions, and detailed description may be partially omitted. Numerical values such as dimensions of members described in this specification, and material names thereof, are mere examples in the embodiment, and selection can be made as appropriate without any limitation to them. In this specification, terms that specify shapes and geometric conditions, for example, "parallel", "orthogonal", "perpendicular", and the like, shall be construed not only in a strict sense but also in a sense of being deemed to be substantially the same as their exact definitions.

In the present embodiment, the term "X direction" means a direction parallel to one side of a substrate. The term "Y direction" means a direction perpendicular to the X direction and parallel to another side of the substrate. The term "Z direction" means a direction perpendicular to both the X direction and the Y direction and parallel to a thickness direction of a wiring board. The term "front surface" means a surface which is on a positive side in the Z direction and on which, with respect to the substrate, antenna wiring is provided. The term "back surface" means a surface which is on a negative side in the Z direction and is the opposite of the surface on which, with respect to the substrate, the antenna wiring is provided. In the present embodiment, a description will be given while taking, as an example, a case where a wiring pattern area 20 is an antenna pattern area 20 having a radio-wave transmitting-and-receiving function (a function to serve as an antenna). However, the wiring pattern area 20 does not necessarily have to have the radio-wave transmitting-and-receiving function (the function to serve as an antenna).

### [Configuration of Head Mounted Display]

With reference to Figs. 1 to 12, a configuration of a head mounted display (hereinafter abbreviated as HMD) according to the present embodiment will now be described. The HMD according to the present embodiment is a transmissive-type (see-through-type) HMD.

As illustrated in Fig. 1, an HMD 90 according to the present embodiment includes a frame 91 and transparent display devices 95 mounted to the frame 91. In the present embodiment, the HMD 90 is a so-called eyeglass-type HMD that includes a right-eye display device 95 and a left-eye display device 95. The structure of the right-eye display device 95 and the structure of the left-eye display device 95 are substantially identical to each other. Moreover, each of the display devices 95 is in synchronization with the other; accordingly, the left one and the right one are configured to display the same image, or images corresponding to each other. The two display devices 95 may be configured to be controllable individually, and the two display devices 95 may display images different from each other. The HMD 90 may be a so-called goggle-type HMD that includes a single display device 95.

The frame 91 of the HMD 90 includes a rim 92 and a pair of temples 93 connected to the rim 92. Each of the display devices 95 is framed in the rim 92. In the present embodiment, wireless communication circuits 94a of the HMD 90 are provided in the rim 92.

Control units 94b for controlling the display devices 95 respectively are provided in the pair of temples 93. The control unit 94b may include a video display unit (not illustrated) that generates video light. In the present embodiment, one control unit 94b is provided in each of the pair of temples 93. The control unit 94b disposed in the right temple 93 is configured to control the right-eye display device 95. The control unit 94b disposed in the left temple 93 is configured to control the left-eye display device 95.

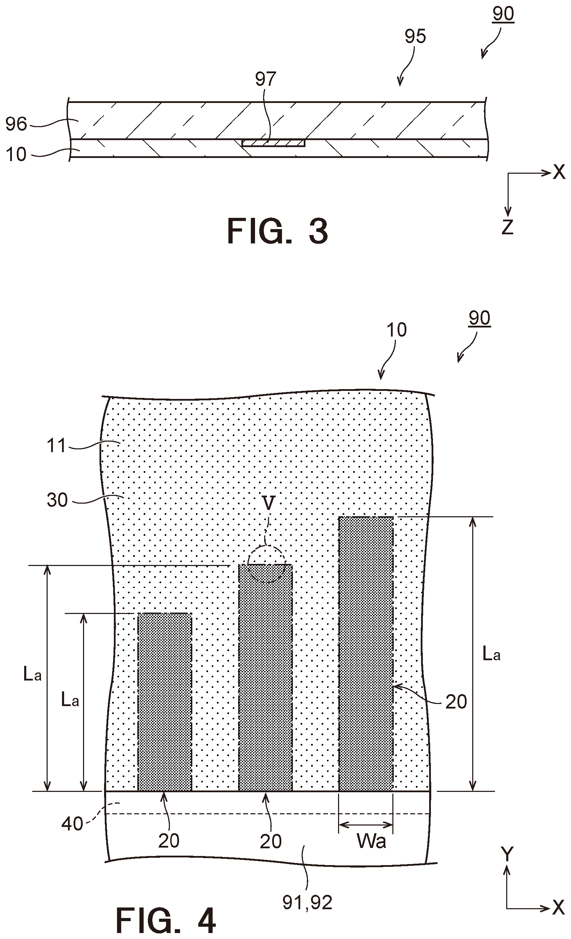

Next, the display device 95 will now be described. As illustrated in Figs. 2 and 3, the display device 95 includes a first base substrate 96, a wiring board 10 provided on the first base substrate 96, and a display unit 97 provided between the first base substrate 96 and the wiring board 10. In the present embodiment, the wiring board 10 covers the entire area of the first base substrate 96. The wiring board 10 may be configured to cover only a part of the first base substrate 96, though not illustrated.

The material of the first base substrate 96 may be any material as long as it has transparency in the spectrum of visible light. For example, a glass base substrate can be used as the first base substrate 96. In the present embodiment, when a user wears the HMD 90, the first base substrate 96 is located at a position farther from the wearer, and the wiring board 10 is located at a position closer to the wearer. That is, when a user wears the HMD 90, the wiring board 10 is located at a position between the first base substrate 96 and the wearer. Because of this structural layout, for example, when a user wears the HMD 90, even if the HMD 90 comes into contact with an ambient structural object or with someone else, it is possible to prevent the wiring board 10 from coming into contact with the ambient structural object, etc., or reduce the risk thereof. Therefore, it is possible to prevent the breaking of antenna wiring 21 of the antenna pattern area 20, which will be described later, of the wiring board 10 due to contact with the ambient structural object, etc., or reduce the risk thereof. When a user wears the HMD 90, the first base substrate 96 may be located at a position closer to the wearer, and the wiring board 10 may be located at a position farther from the wearer.

The display unit 97 includes a half mirror. The half mirror is a member that superposes, on external light coming from ahead of the display device 95, video light sent from a video display unit (not illustrated) that generates the video light. The display unit 97 is configured such that its image display area will be transparent when no image is displayed, and light passing through the display unit 97 enables the wearer to see the outside world. In addition, the wearer is able to visually recognize a virtual image (image) formed by the video light while seeing the outside world. In the illustrated example, the display unit 97 is provided at a position of overlapping with a substantially center portion of the first base substrate 96 in a front view (see Fig. 2). However, the display unit 97 may be provided at any area of the first base substrate 96 in a front view in an overlapping manner, without any limitation to this example.

The display device 95 may be a projector-scheme display that performs image projection by means of a prism or a hologram, or alternatively, a display device using a transmissive-type liquid crystal display or the like.

### [Configuration of Wiring Board]

Next, with reference to Figs. 4 to 12, a configuration of the wiring board 10 of the display device 95 will now be explained. Figs. 4 to 12 are diagrams illustrating the wiring board 10.

As illustrated in Fig. 4, the wiring board 10 includes a substrate 11 that has transparency and an antenna pattern area(s) (a wiring pattern area(s)) 20 arranged on the substrate 11. A power feeding portion 40 is electrically connected to the antenna pattern area 20. The wiring board 10 further includes a dummy pattern area 30 located around the antenna pattern area 20 on the substrate 11. First, the substrate 11 will now be described.

### (Substrate)

The substrate 11 has a shape like a rectangle in a front view (a shape of a rectangle with rounded corners (see Fig. 2)). Its longer-side direction is parallel to the X direction. Its shorter-side direction is parallel to the Y direction. The substrate 11 has transparency and is substantially flat. Its thickness is substantially uniform as a whole. The shape of the substrate 11 is selectable as appropriate so that it will be suited for the shape of the first base substrate 96 of the display device 95 mounted to the frame 91.

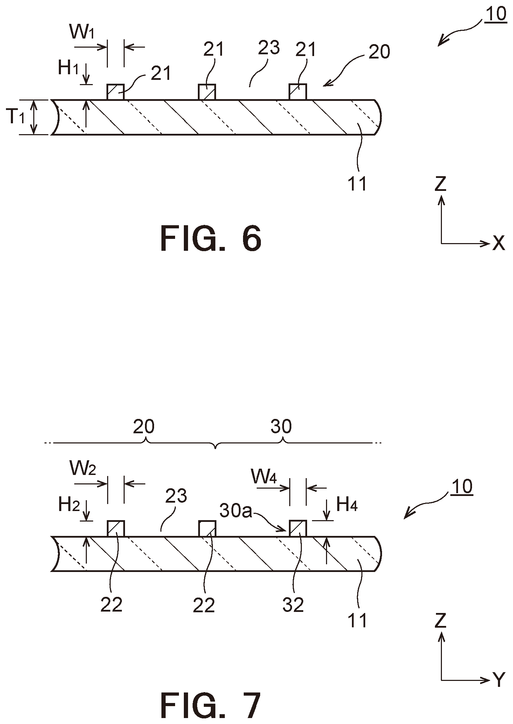

The material of the substrate 11 may be any material as long as it has transparency in the spectrum of visible light and has electric insulation property. For example, the substrate 11 may include glass or a resin film. In the present embodiment, the material of the substrate 11 is polyethylene terephthalate, but is not limited thereto. As the material of the substrate 11, it is preferable to use an organic insulating material, for example, a polyester-based resin such as polyethylene terephthalate, an acryl-based resin such as polymethyl methacrylate, a polycarbonate-based resin, a polyimide-based resin, a polyolefin-based resin such as a cycloolefin polymer, a cellulose-based resin material such as triacetyl cellulose, or the like. Ceramics or the like can be selected as the material of the substrate 11, depending on the intended use. In the illustrated example, the substrate 11 has a single-layer structure, but is not limited thereto; it may have a structure made up of a plurality of bases or a multilayer structure. The substrate 11 may be like a film or like a plate. Therefore, the thickness of the substrate 11 is not specifically limited, and selection can be made as appropriate, depending on the intended use. As one example, the substrate 11 can have a thickness T₁ (a length in the Z direction, see Fig. 6) that is within a range from, for example, 10 µm inclusive to 200 µm inclusive.

The substrate 11 has transparency. In this specification, the meaning of "has transparency" is that the transmittance of visible light (light whose wavelengths are within a range from 400 nm inclusive to 700 nm inclusive) is 85% or greater. The substrate 11 may be transparent to an extent that the transmittance of visible light (light whose wavelengths are within a range from 400 nm inclusive to 700 nm inclusive) is 85% or greater, preferably, 90% or greater. Though there is no specific upper limit in the transmittance of visible light through the substrate 11, for example, the limit may be 100% or less. Setting the transmittance of visible light through the substrate 11 to the above range makes it possible to prevent outside-world viewability from being impaired when the wiring board 10 has been integrated in the HDM 90, or reduce the risk thereof. The visible light means light whose wavelengths are within a range from 400 nm inclusive to 700 nm inclusive. The meaning of "the transmittance of visible light is 85% or greater" is that the transmittance is 85% or greater throughout the entire spectrum within the range from 400 nm inclusive to 700 nm inclusive when light absorbance measurement is performed for the substrate 11 using a known spectrophotometer (for example, a spectroscope V-670 manufactured by JASCO corporation).

### (Antenna Pattern Area)

Next, the antenna pattern area 20 will now be described. In Fig. 4, there exists a plurality of (three) antenna pattern areas 20 on the substrate 11. They correspond to frequency bands different from one another. That is, these antenna pattern areas 20 have lengths Lₐ (lengths in the Y direction) different from one another and corresponding to their respective specific frequency bands. The lower the corresponding frequency band is, the greater the length Lₐ of the antenna pattern area 20 is. In a case where each antenna pattern area 20 has a radio-wave transmitting-and-receiving function, each antenna pattern area 20 may correspond to any of a phone antenna, a Wi-Fi antenna, a 3G antenna, a 4G antenna, an LTE antenna, a Bluetooth (^{®}) antenna, an NFC antenna, and the like. Alternatively, in a case where each antenna pattern area 20 does not have a radio-wave transmitting-and-receiving function, each antenna pattern area 20 may fulfill, for example, a gesture sensing function, a wireless power feeding function, an anti-fog function, a heater function, a hovering function (a function of enabling the user to operate a display without touching it directly), a fingerprint authentication function, a noise-cut (shield) function, or the like. In this specification, the term "gesture sensing function" means a function of detecting a relative position (distance, angle, etc.) of a target object in relation to the antenna pattern area 20 or a moving speed of the target object. In this case, for example, the antenna pattern area 20 may fulfill the gesture sensing function by detecting a millimeter wave.

Each antenna pattern area 20 has a substantially rectangular shape in a plan view. In the illustrated example, the longer-side direction of each antenna pattern area 20 is parallel to the Y direction, and the shorter-side direction thereof is parallel to the X direction. The length Lₐ of each antenna pattern area 20 in its longer-side direction (Y direction) can be selected within a range from, for example, 3 mm inclusive to 100 mm inclusive. The width Wₐ of each antenna pattern area 20 in its shorter-side direction (width direction) can be determined while taking into consideration (i) a skin depth of the antenna wiring 21 and the antenna interconnection wiring 22, (ii) a sheet resistance value of the antenna pattern area 20, (iii) a viewing angle of the antenna wiring 21 and the antenna interconnection wiring 22, and the like, as will be described later. Specifically, the width Wₐ of each antenna pattern area 20 can be selected within a range from, for example, 1 mm inclusive to 25 mm inclusive.

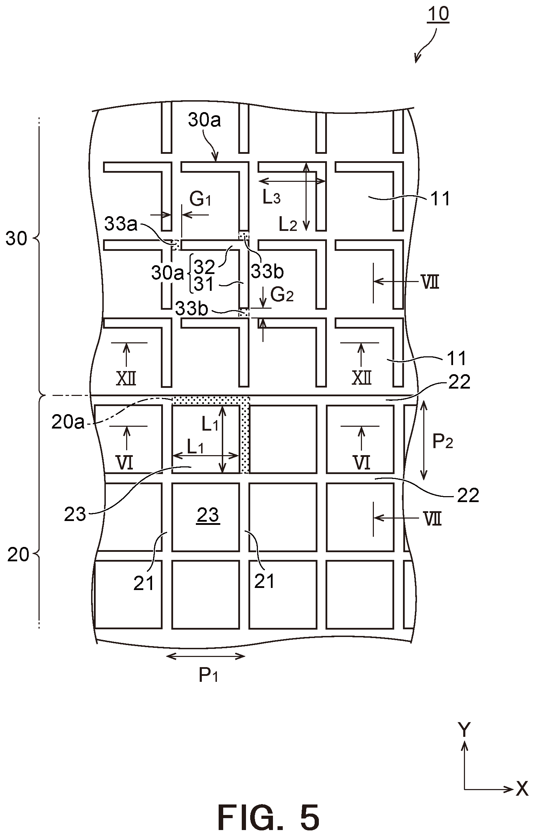

Each antenna pattern area 20 has a grid shape or a mesh shape formed of metal wiring and has a uniform iterative pattern in the X direction and the Y direction. That is, as illustrated in Fig. 5, the antenna pattern area 20 is configured as an iterative array of unit pattern shapes 20a (a halftone-dotted portion in Fig. 5) each of which has a shape like a letter L and is comprised of a shape portion extending in the X direction (a part of the antenna interconnection wiring 22 to be described later) and a shape portion extending in the Y direction (a part of the antenna wiring 21 to be described later).

As illustrated in Fig. 5, each antenna pattern area 20 includes pieces of antenna wiring (wiring) 21 having a function to serve as an antenna and pieces of antenna interconnection wiring 22 interconnecting the pieces of antenna wiring 21. Specifically, the pieces of antenna wiring 21 and the pieces of antenna interconnection wiring 22 form a regular array having a grid shape or a mesh shape as a whole. Each of the pieces of antenna wiring 21 extends in a direction corresponding to the frequency band of the antenna (Y direction). Each of the pieces of antenna interconnection wiring 22 extends in a direction orthogonal to the antenna wiring 21 (X direction). By having the length Lₐ corresponding to the predetermined frequency band (the above-mentioned length of the antenna pattern area 20), the antenna wiring 21 mainly fulfills a function to serve as the antenna. On the other hand, by interconnecting the pieces of antenna wiring 21, the antenna interconnection wiring 22 plays a role of preventing or reducing problems such as the breaking of the antenna wiring 21 or electric disconnection between the antenna wiring 21 and the power feeding portion 40.

In each antenna pattern area 20, a plurality of openings 23 is formed by being surrounded by the pieces of antenna wiring 21 arranged adjacent to one another and by the pieces of antenna interconnection wiring 22 arranged adjacent to one another. The pieces of antenna wiring 21 and the pieces of antenna interconnection wiring 22 are arranged at equal intervals with respect to one another. That is, the pieces of antenna wiring 21 are arranged at equal intervals with respect to one another in the width direction (X direction) of the antenna pattern area 20. The pitch P₁ of the pieces of antenna wiring 21 can be determined while taking into consideration (i) the skin depth of the antenna wiring 21, (ii) the sheet resistance value of the antenna pattern area 20, (iii) the viewing angle of the antenna wiring 21, and the like, as will be described later. Specifically, the pitch P₁ of the pieces of antenna wiring 21 can be selected within a range from, for example, 0.01 mm inclusive to 1 mm inclusive. The pitch P₁ of the pieces of antenna wiring 21 is uniform in the width direction (X direction) of the antenna pattern area 20, but is not limited thereto. It may be non-uniform in the width direction (X direction).

The pieces of antenna interconnection wiring 22 are arranged at equal intervals with respect to one another in the longer-side direction (Y direction) of the antenna pattern area 20. The pitch P₂ of the pieces of antenna interconnection wiring 22 can be determined while taking into consideration (i) the skin depth of the antenna interconnection wiring 22, (ii) the sheet resistance value of the antenna pattern area 20, (iii) the viewing angle of the antenna interconnection wiring 22, and the like, as will be described later. Specifically, the pitch P₂ of the pieces of antenna interconnection wiring 22 can be selected within a range from, for example, 0.01 mm inclusive to 1 mm inclusive.

Arranging each of the pieces of antenna wiring 21 and the pieces of antenna interconnection wiring 22 at equal intervals as described above eliminates or reduces a variation in size among the openings 23 inside each antenna pattern area 20, thereby making it harder for the antenna pattern area 20 to be noticed with the naked eye. In addition, the pitch P₁ of the pieces of antenna wiring 21 is equal to the pitch P₂ of the pieces of antenna interconnection wiring 22. Therefore, each opening 23 has a substantially square shape in a plan view, and the substrate 11 having transparency is exposed through each opening 23. For this reason, it is possible to enhance the transparency of the wiring board 10 as a whole by increasing the area size of each opening 23. The length L₁ of one side of each opening 23 can be selected within a range from, for example, 0.01 mm inclusive to 1 mm inclusive. Each of the pieces of antenna wiring 21 and each of the pieces of antenna interconnection wiring 22 are orthogonal to each other; however, the two may intersect with each other at an acute angle or at an obtuse angle, without any limitation thereto. Though it is preferable if the openings 23 have the same size and the same shape throughout the entire area, uniformity throughout the entire area is not necessarily required; for example, the size and/or shape of them may vary from position to position.

As illustrated in Fig. 6, each of the pieces of antenna wiring 21 has a substantially rectangular shape or a substantially square shape in cross section (X-directional cross section) perpendicular to its longer-side direction. In this case, the cross-sectional shape of the antenna wiring 21 is substantially uniform in the longer-side direction (Y direction) of the antenna wiring 21. As illustrated in Fig. 7, each of the pieces of antenna interconnection wiring 22 has a substantially rectangular shape or a substantially square shape in cross section (Y-directional cross section) perpendicular to its longer-side direction, and this cross-sectional shape is substantially the same as the cross-sectional shape (X-directional cross-sectional shape) of the antenna wiring 21 described above. In this case, the cross-sectional shape of the antenna interconnection wiring 22 is substantially uniform in the longer-side direction (X direction) of the antenna interconnection wiring 22. The cross-sectional shape of the antenna wiring 21 and the antenna interconnection wiring 22 does not necessarily have to be a substantially rectangular shape or a substantially square shape. For example, the shape may be substantially trapezoidal such that its front face (the positive side in the Z direction) is narrower than its back face (the negative side in the Z direction) or may have curved lateral faces at both sides in the width direction.

In the present embodiment, the line width W₁ (the length in the X direction, see Fig. 6) of the antenna wiring 21 and the height H₁ (the length in the Z direction, see Fig. 6) thereof can be determined while taking into consideration (i) the skin depth of the antenna wiring 21, (ii) the sheet resistance value of the antenna pattern area 20, (iii) the viewing angle of the antenna wiring 21, and the like, as will be described later. For example, the line width W₁ of the antenna wiring 21 can be selected within a range from 0.1 µm inclusive to 5.0 µm inclusive, and the height H₁ of the antenna wiring 21 can be selected within a range from, for example, 0.1 µm inclusive to 5.0 µm inclusive.

Similarly, the line width W₂ (the length in the Y direction, see Fig. 7) of the antenna interconnection wiring 22 and the height H₂ (the length in the Z direction, see Fig. 7) thereof can be determined while taking into consideration (i) the skin depth of the antenna interconnection wiring 22, (ii) the sheet resistance value of the antenna pattern area 20, (iii) the viewing angle of the antenna interconnection wiring 22, and the like, as will be described later. For example, the line width W₂ of the antenna interconnection wiring 22 can be selected within a range from 0.1 µm inclusive to 5.0 µm inclusive, and the height H₂ of the antenna interconnection wiring 22 can be selected within a range from, for example, 0.1 µm inclusive to 5.0 µm inclusive.

The material of the antenna wiring 21 and the antenna interconnection wiring 22 may be any metal material having conductivity. In the present embodiment, the material of the antenna wiring 21 and the antenna interconnection wiring 22 is copper but is not limited thereto. For example, a metal material (including alloy) such as gold, silver, copper, platinum, tin, aluminum, iron, nickel, or the like can be used as the material of the antenna wiring 21 and the antenna interconnection wiring 22.

As described above, the mesh shape (dimensions) of the antenna wiring 21 and the antenna interconnection wiring 22 of the antenna pattern area 20 can be determined while taking into consideration (i) the skin depth of the antenna wiring 21 and the antenna interconnection wiring 22, (ii) the sheet resistance value of the antenna pattern area 20, (iii) the viewing angle of the antenna wiring 21 and the antenna interconnection wiring 22, and the like. A method of determining the mesh shape (dimensions) of the antenna pattern area 20 will be described below.

### (i) Skin Depth

As described above, the length Lₐ (the length in the Y direction) of the antenna pattern area 20 corresponds to the specific frequency band. The lower the corresponding frequency band is, the greater the length Lₐ is. The line width W₁ of the antenna wiring 21, the height H₁ thereof, the line width W₂ of the antenna interconnection wiring 22, and the height H₂ thereof may be determined after determining the length Lₐ of the antenna pattern area 20.

That is, the line width W₁ of the antenna wiring 21, the height H₁ thereof, the line width W₂ of the antenna interconnection wiring 22, and the height H₂ thereof may be determined depending on the corresponding frequency band in such a way as not to be influenced by skin effect. Specifically, in cross section of each of the antenna wiring 21 and the antenna interconnection wiring 22, either the height H₁, H₂ or the line width W₁, W₂, whichever is less, may be twice or less as great as the skin depth of each of the antenna wiring 21 and the antenna interconnection wiring 22.

In general, when an alternating current is applied to wiring, the higher the frequency is, the harder the current to flow through the center portion of the wiring; accordingly, the current flows along the surface of the wiring. This phenomenon of current flow along the surface only, when an alternating current is applied to wiring, is called skin effect. The skin depth is a depth, from the surface of wiring, of attenuation to 1/e (approx. 0.37) times of the value of the current at the surface where it is easiest for the current to flow. In general, the skin depth δ can be calculated by the following equation.$δ = \sqrt{\frac{2}{ωμσ}}$

In the above equation, ω denotes angular frequency (= 2πf), µ denotes permeability (4π × 10⁻⁷ [H/m] in a vacuum), and σ denotes electric conductivity of a conductor that constitutes wiring (if copper, 5.8 × 10⁷ [S/m]). The skin depth δ of wiring made of copper is approximately 2.3 µm when the frequency is 0.8 GHz, approximately 1.3 µm when the frequency is 2.4 GHz, approximately 1.0 µm when the frequency is 4.4 GHz, and approximately 0.85 µm when the frequency is 6 GHz.

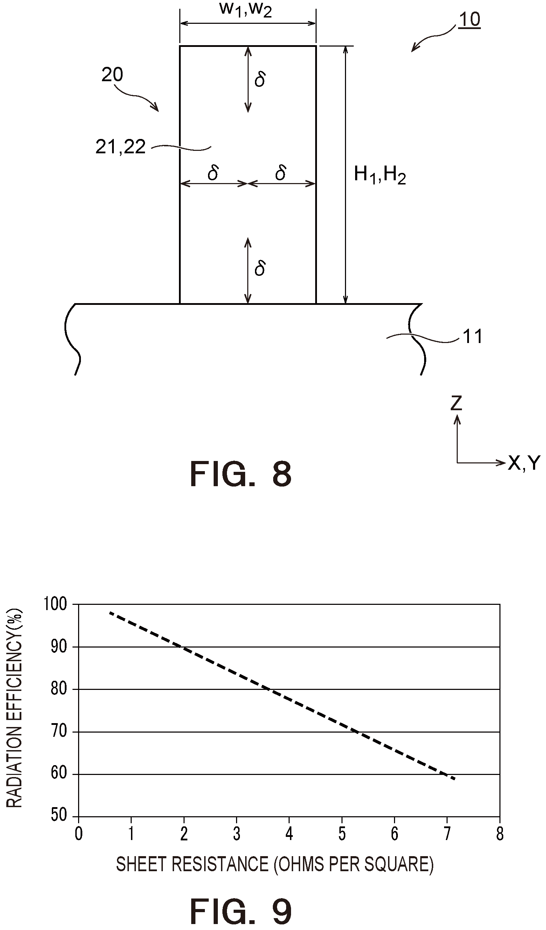

In the present embodiment, either the height H₁ (H₂) of the antenna wiring 21 (the antenna interconnection wiring 22) or the line width W₁ (W₂) thereof, whichever is less, may be twice (2δ) or less as great as the skin depth δ for the corresponding frequency. For example, in a case where the line width W₁ (W₂) is less than the height H₁ (H₂) of the antenna wiring 21 (the antenna interconnection wiring 22) (W₁ < H₁) (W₂ < H₂) as illustrated in Fig. 8, the line width W₁ (W₂) of the antenna wiring 21 (the antenna interconnection wiring 22) may be twice or less as great as the skin depth δ for the corresponding frequency (W₁ ≤ 2δ (W₂ ≤ 2δ)). For example, the line width W₁ (W₂) may be 2.6 µm or less when the frequency of the antenna pattern area 20 is 2.4 GHz. The line width W₁ (W₂) may be 1.7 µm or less when the frequency of the antenna pattern area 20 is 6 GHz

This makes it possible for the current to flow through the antenna wiring 21 (the antenna interconnection wiring 22) with distribution throughout substantially the entire cross section thereof. For this reason, it is possible to use the antenna wiring 21 (the antenna interconnection wiring 22) efficiently and minimize the cross-sectional area of the antenna wiring 21 (the antenna interconnection wiring 22). Consequently, it is possible to increase an aperture ratio A1 of the antenna pattern area 20 and make it harder for the antenna pattern area 20 to be noticed with the naked eye.

### (ii) Sheet Resistance Value

The sheet resistance value of the antenna pattern area 20 may be 5 ohms per square or less. Setting the sheet resistance value to 5 ohms per square or less makes it possible to preserve the performance of the antenna pattern area 20. Specifically, it is possible to increase the radiation efficiency (percentage indicating how much power inputted into a single antenna pattern area 20 alone is radiated) of the antenna pattern area 20 serving as an antenna.

Fig. 9 illustrates a simulation result of a relationship between sheet resistance and radiation efficiency in a case where the frequency corresponding to the antenna pattern area 20 serving as an antenna is 2.4 GHz. As is clear from Fig. 9, the radiation efficiency of the antenna pattern area 20 alone is 75% or higher when the sheet resistance value of the antenna pattern area 20 is 5 ohms per square or less, making it possible to preserve its antenna performance. Also in a case where the frequency corresponding to the antenna pattern area 20 is any frequency other than 2.4 GHz, it is possible to preserve the radiation efficiency well by setting the sheet resistance value to 5 ohms per square or less.

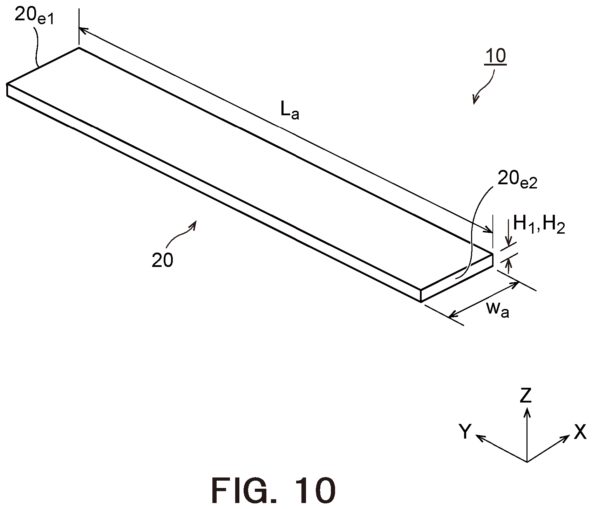

The sheet resistance value (ohms per square) of the antenna pattern area 20 can be calculated as follows. A resistance value R between two ends 20ₑ₁ and 20ₑ₂ (see Fig. 10) of the antenna pattern area 20 in the longer-side direction (Y direction) is actually measured. Next, the resistance value R is divided by a ratio of the length Lₐ to the width Wₐ (Lₐ/Wₐ) of the antenna pattern area 20; by this means, it is possible to calculate the sheet resistance value Rₛ (ohms per square) of the antenna pattern area 20. Namely, the sheet resistance value is: Rₛ = R × Wₐ/Lₐ.

As described above, the radiation efficiency of the antenna pattern area 20 alone is 75% or higher when the sheet resistance value of the antenna pattern area 20 is 5 ohms per square or less, making it possible to enhance the performance of the antenna pattern area 20 serving as an antenna. Moreover, it is possible to reduce the width Wₐ of the antenna pattern area 20 and the height H₁, H₂ thereof as much as possible within a range of satisfying the above condition of the sheet resistance value. Therefore, it is possible to increase the aperture ratio A1 of the antenna pattern area 20 and make it harder for the antenna pattern area 20 to be visually noticed.

### (iii) Viewing Angle

In the present embodiment, when each of the antenna wiring 21 and the antenna interconnection wiring 22 is viewed at a viewing angle of 120°, its maximum width may be 3 µm or less.

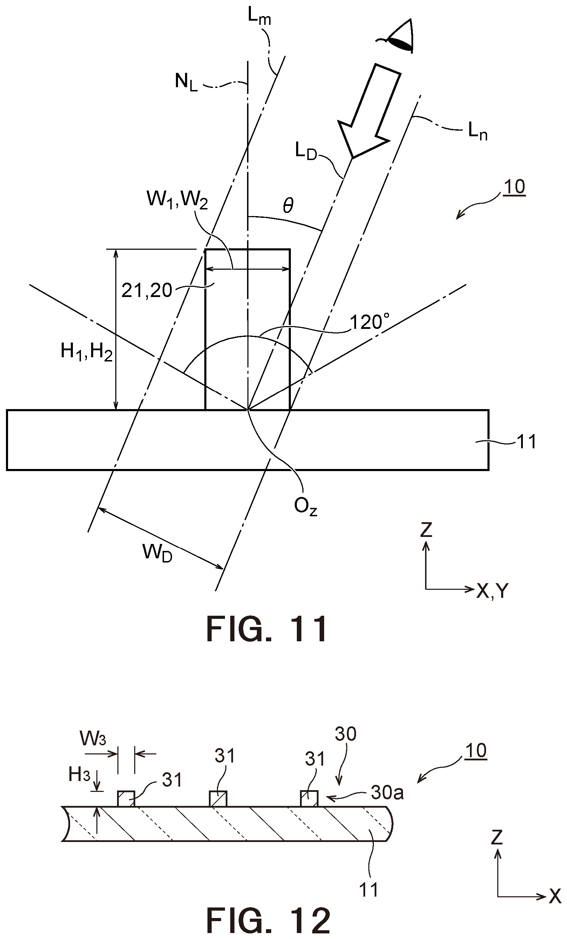

That is, as illustrated in Fig. 11, in cross section perpendicular to the longer-side direction of the antenna wiring 21 (the antenna interconnection wiring 22), a width W_{D} of the antenna wiring 21 (the antenna interconnection wiring 22) when viewed in a direction of a predetermined line of sight L_{D} is defined. The maximum width of the antenna wiring 21 (the antenna interconnection wiring 22) when the line of sight L_{D} is moved within a range of a viewing angle of 120° may be 3 µm or less.

The term "viewing angle" as used herein means an angle of 2 × θ when an angle formed by a normal line NL perpendicular to the surface of the substrate 11 and the line of sight L_{D} directed to a point of intersection O_{Z} of the normal line NL and the surface of the substrate 11 is defined as θ. "The width W_{D} when viewed in the direction of the line of sight L_{D}" means a distance between a pair of straight lines Lₘ and Lₙ when the pair of straight lines Lₘ and Lₙ parallel to the line of sight L_{D} are tangential to the antenna wiring 21 (the antenna interconnection wiring 22) in cross section.

For example, when the height H₁ (H₂) of the antenna wiring 21 (the antenna interconnection wiring 22) is equal to the line width W₁ (W₂) of the antenna wiring 21 (the antenna interconnection wiring 22) (H₁ = W₁ (H₂ = W₂)), the width W_{D} when viewed at a viewing angle of 120° is maximized when an equation of θ = 45° holds, and its value in this case is 1.41 × W₁. When the height H₁ (H₂) of the antenna wiring 21 (the antenna interconnection wiring 22) is twice as great as the line width W₁ (W₂) of the antenna wiring 21 (the antenna interconnection wiring 22) (H₁ = 2 × W₁ (H₂ = 2 × W₂)), the width W_{D} when viewed at a viewing angle of 120° is maximized when an equation of θ = 60° holds, and its value in this case is 2.23 × W₁.

In general, when a user views the wiring board 10, the maximum viewing angle is believed to be approximately 120°. The maximum width of the antenna wiring 21 (the antenna interconnection wiring 22) that is visually perceivable to the human eye is approximately 3 µm. Therefore, by setting the maximum width of the antenna wiring 21 (the antenna interconnection wiring 22) when viewed at a viewing angle of 120° to 3 µm, it is possible to make it harder for the antenna wiring 21 (the antenna interconnection wiring 22) to be noticed by the user who sees it with the naked eye.

By the way, referring back to Fig. 2, in a front view of the HMD 90 (that is, when viewed in a thickness direction of the substrate 11), the antenna pattern area 20 and the display unit 97 are shifted in position from each other. In other words, the antenna pattern area 20 with this shift is provided at a position where it does not overlap with the display unit 97 in a front view of the HMD 90. This makes it possible to improve the viewability of the display unit 97. Moreover, since the antenna pattern area 20 and the display unit 97 are shifted in position from each other in a front view of the HMD 90, it is possible to enhance the performance of the antenna pattern area 20 serving as an antenna. That is, since the antenna pattern area 20 and the display unit 97 are shifted in position from each other in a front view of the HMD 90, it is possible to make the distance between the antenna pattern area 20 and the display unit 97, which is conductive, longer. Therefore, it is possible to prevent or reduce an adverse effect on radio-wave transmission and reception. In this case, the minimum distance D between the antenna pattern area 20 and the display unit 97 should preferably be 0.1 mm or greater, more preferably, 0.2 mm or greater. Setting the minimum distance D to 0.1 mm or greater makes it possible to further improve the viewability of the display unit 97. Moreover, this makes it possible to prevent or reduce an adverse effect on radio-wave transmission and reception effectively and further enhance the performance of the antenna pattern area 20 serving as an antenna. Setting the minimum distance D to 0.2 mm or greater makes it possible to still further improve the viewability of the display unit 97. Moreover, this makes it possible to prevent or reduce an adverse effect on radio-wave transmission and reception more effectively and still further enhance the performance of the antenna pattern area 20 serving as an antenna. The upper limit of the minimum distance D may be set as appropriate within a range in which the antenna pattern area 20 can be arranged inside the frame 91.

The antenna pattern area 20 is provided at a position closer to the frame 91 than the display unit 97 is. This makes it easier to connect the antenna pattern area 20 to the wireless communication circuit 94a provided in the frame 91. In the illustrated example, the antenna pattern area 20 extends in the Y direction to reach the rim 92 of the frame 91 in a front view of the HMD 90. In this case, at least a part of the antenna pattern area 20 may be provided at a position of overlapping with the rim 92 of the frame 91 in a front view of the HMD 90. This makes it possible to further increase the ease of connection of the antenna pattern area 20 to the wireless communication circuit 94a provided in the frame 91. The antenna pattern area 20 does not necessarily have to reach the rim 92 of the frame 91 in a front view of the HMD 90.

### (Dummy Pattern Area)

Next, the dummy pattern area 30 will now be described. Referring back to Fig. 4, the dummy pattern area 30 is provided in such a way as to surround each antenna pattern area 20, and is formed in such a way as to surround all of the periphery sides (the positive side in the X direction, the negative side in the X direction, and the positive side in the Y direction) of each antenna pattern area 20, except for the side facing the power feeding portion 40 (the negative side in the Y direction). In this case, the dummy pattern area 30 is arranged on the substrate 11 at substantially the entire area, except for the antenna pattern areas 20 and the power feeding portion 40. Unlike the antenna pattern area 20, the dummy pattern area 30 never fulfills a function to serve as the antenna.

As illustrated in Fig. 5, the dummy pattern area 30 is configured as an iteration of dummy wiring 30a having a predetermined unit pattern shape. That is, the dummy pattern area 30 includes pieces of dummy wiring 30a of identical shape. Each of the pieces of dummy wiring 30a is electrically independent of the antenna pattern area 20 (the antenna wiring 21 and the antenna interconnection wiring 22). The pieces of dummy wiring 30a are arranged regularly throughout the entire dummy pattern area 30. The pieces of dummy wiring 30a are separated from one another in a plane direction and are arranged like islands on the substrate 11 by protruding therefrom. That is, each of the pieces of dummy wiring 30a is electrically independent of the antenna pattern area 20, the power feeding portion 40, and the others of the pieces of dummy wiring 30a. Each of the pieces of dummy wiring 30a has a shape like a letter L in a plan view and includes a first dummy wiring portion 31 extending in the Y direction and a second dummy wiring portion 32 extending in the X direction. The first dummy wiring portion 31 has a predetermined length L₂ (the length in the Y direction), the second dummy wiring portion 32 has a predetermined length L₃ (the length in the X direction), and these lengths are equal to each other (L₂ = L₃).

There is a clearance portion 33a (a halftone-dotted portion in Fig. 5) between two pieces of dummy wiring 30a located next to each other in the X direction. There is a clearance portion 33b (a halftone-dotted portion in Fig. 5) between two pieces of dummy wiring 30a located next to each other in the Y direction. In this case, the pieces of dummy wiring 30a are arranged at equal intervals, with each adjacent two spaced from each other. That is, each two pieces of dummy wiring 30a located next to each other in the X direction are equally spaced from each other, and a gap G₁ therebetween can be selected within a range from, for example, 1 µm inclusive to 20 µm inclusive. Similarly, each two pieces of dummy wiring 30a located next to each other in the Y direction are equally spaced from each other, and a gap G₂ therebetween can be selected within a range from, for example, 1 µm inclusive to 20 µm inclusive. The maximum value of the gap G₁, G₂ may be 0.8 or less times as great as the aforementioned pitch P₁, P₂. In this case, the gap G₁ between the pieces of dummy wiring 30a in the X direction is equal to the gap G₂ between the pieces of dummy wiring 30a in the Y direction (G₁ = G₂).

In the present embodiment, the dummy wiring 30a has a shape of partial missing of the unit pattern shape 20a of the antenna pattern area 20 described earlier. That is, the shape of the dummy wiring 30a is a shape obtained by removing the clearance portion 33a, 33b described above from the unit pattern shape 20a, which is like a letter L, of the antenna pattern area 20. That is, a shape obtained by combining the pieces of dummy wiring 30a of the dummy pattern area 30 and a plurality of clearance portions 33a, 33b thereof together is equivalent to the grid shape or the mesh shape of the antenna pattern area 20. Since the dummy wiring 30a of the dummy pattern area 30 has a shape of partial missing of the unit pattern shape 20a of the antenna pattern area 20, it is possible to make it harder for the difference between the antenna pattern area 20 and the dummy pattern area 30 to be visually perceived and thus make the antenna pattern area 20 formed on the substrate 11 more invisible.

In Fig. 5, the antenna pattern area 20 and the dummy pattern area 30 are located next to each other in the Y direction. The first dummy wiring portion 31 lies on an extension of the antenna wiring 21 near the boundary between the antenna pattern area 20 and the dummy pattern area 30. This makes it harder for the difference between the antenna pattern area 20 and the dummy pattern area 30 to be visually perceived. For the same reason, also at a position where the antenna pattern area 20 and the dummy pattern area 30 are located next to each other in the X direction, it is preferable if the second dummy wiring portion 32 lies on an extension of the antenna interconnection wiring 22, though not illustrated.

As illustrated in Fig. 12, the first dummy wiring portion 31 of each of the pieces of dummy wiring 30a has a substantially rectangular shape or a substantially square shape in cross section (X-directional cross section) perpendicular to its longer-side direction (Y direction). In addition, as illustrated in Fig. 7, the second dummy wiring portion 32 of each of the pieces of dummy wiring 30a has a substantially rectangular shape or a substantially square shape in cross section (Y-directional cross section) perpendicular to its longer-side direction (X direction). In this case, the cross-sectional shape of the first dummy wiring portion 31 is substantially the same as the cross-sectional shape of the antenna wiring 21, and the cross-sectional shape of the second dummy wiring portion 32 is substantially the same as the cross-sectional shape of the antenna interconnection wiring 22.

In the present embodiment, the line width W₃ (the length in the X direction, see Fig. 12) of the first dummy wiring portion 31 is substantially the same as the line width W₁ of the antenna wiring 21. The line width W₄ (the length in the Y direction, see Fig. 7) of the second dummy wiring portion 32 is substantially the same as the line width W₂ of the antenna interconnection wiring 22. The height H₃ (the length in the Z direction, see Fig. 12) of the first dummy wiring portion 31 and the height H₄ (the length in the Z direction, see Fig. 7) of the second dummy wiring portion 32 are also substantially the same as the height H₁ of the antenna wiring 21 and the height H₂ of the antenna interconnection wiring 22 respectively.

The same metal material as the material of the antenna wiring 21 and the material of the antenna interconnection wiring 22 can be used as the material of the dummy wiring 30a.

By the way, in the present embodiment, the antenna pattern area 20 described earlier and the dummy pattern area 30 described above have predetermined aperture ratios A1 and A2 respectively. The aperture ratio A1 of the antenna pattern area 20 can be selected within a range from, for example, 85% inclusive to 99.9% inclusive. The aperture ratio A2 of the dummy pattern area 30 can be selected within a range from, for example, 87% inclusive to 100% exclusive. In this case, the aperture ratio A2 of the dummy pattern area 30 is higher than the aperture ratio A1 of the antenna pattern area 20 (A2 > A1). This ensures sufficient transparency of the wiring board 10. The aperture ratio A2 of the dummy pattern area 30, without being limited to the above, may be lower than the aperture ratio A1 of the antenna pattern area 20 (A2 < Al).

It is preferable if the difference (|A2 - A1|) between the aperture ratio A2 of the dummy pattern area 30 and the aperture ratio A1 of the antenna pattern area 20 is within a range from 0% exclusive to 7% inclusive, more preferably, within a range from 0% exclusive to 1% inclusive. Selecting a small value for the difference between the aperture ratio A2 of the dummy pattern area 30 and the aperture ratio A1 of the antenna pattern area 20 makes the boundary between the antenna pattern area 20 and the dummy pattern area 30 more invisible and makes it harder for the presence of the antenna pattern area 20 to be noticed with the naked eye.

An aperture ratio A3 of a combination area made up of the antenna pattern area 20 and the dummy pattern area 30 (namely, the aperture ratio of the wiring board 10 as a whole) can be selected within a range from, for example, 87% inclusive to 100% exclusive. Selecting the aperture ratio A3 within this range ensures sufficient conductivity and transparency of the wiring board 10.

The term "aperture ratio" means an area-size ratio (%) of an open area (an area where no metal portion such as the antenna wiring 21, the antenna interconnection wiring 22, the dummy wiring 30a exists and therefore the substrate 11 is exposed) to unit area of a predetermined area (the antenna pattern area 20, the dummy pattern area 30, or the antenna pattern area 20 and the dummy pattern area 30).

Referring back to Fig. 4, the power feeding portion 40 is electrically connected to the antenna pattern area 20. The power feeding portion 40 is a thin conductive member having a substantially rectangular shape. The longer-side direction of the power feeding portion 40 is parallel to the X direction. The shorter-side direction of the power feeding portion 40 is parallel to the Y direction. The power feeding portion 40 is disposed at the longer-side end (the negative-side end in the Y direction) of the substrate 11. For example, a metal material (including alloy) such as gold, silver, copper, platinum, tin, aluminum, iron, nickel, or the like can be used as the material of the power feeding portion 40. The power feeding portion 40 is electrically connected to the wireless communication circuit 94a (see Fig. 2) provided in the frame 91 of the HMD 90 when the wiring board 10 has been integrated in the HMD 90. It is preferable if the power feeding portion 40 is provided at a position of overlapping with the rim 92 of the frame 91 in a front view of the HMD 90. This makes it possible to further increase the ease of connection of the antenna pattern area 20 to the wireless communication circuit 94a and prevent outside-world viewability from being impaired, or reduce the risk thereof. The power feeding portion 40 is provided in/on the front surface of the substrate 11, but is not limited thereto. A part or a whole of the power feeding portion 40 may be located outside the edge of the substrate 11.

### [Method of Manufacturing Wiring Board]

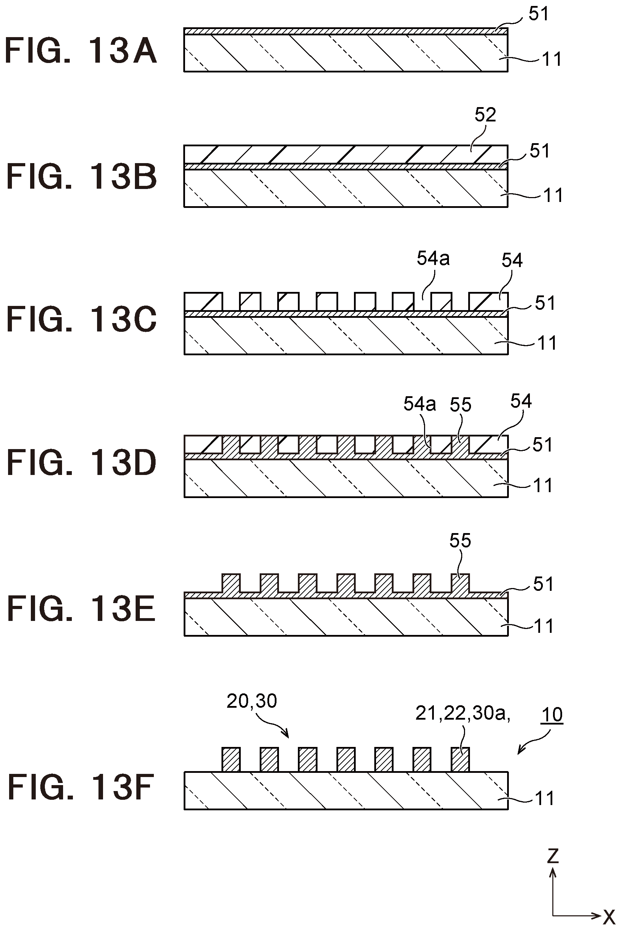

Next, with reference to Figs. 13A to 13F, a method of manufacturing a wiring board will now be described. Figs. 13A to 13F are cross-sectional views of a method of manufacturing a wiring board.

First, as illustrated in Fig. 13A, a substrate 11 that has transparency is prepared.

Next, an antenna pattern area 20 that includes pieces of antenna wiring 21, and a dummy pattern area 30 that is located around the antenna pattern area 20 and is electrically independent of the antenna wiring 21, are formed on the substrate 11. In this process, first, a conductive layer 51 is formed at substantially the entire area on the front surface of the substrate 11. In the present embodiment, the conductive layer 51 has a thickness of 200 nm. However, the thickness of the conductive layer 51, without being limited to the above, can be selected as appropriate within a range from 10 nm inclusive to 1,000 nm inclusive. In the present embodiment, the conductive layer 51 is formed by sputtering using copper. A plasma CVD method may be used for forming the conductive layer 51.

Next, as illustrated in Fig. 13B, a photo-curable insulating resist 52 is supplied to substantially the entire area over the front surface of the substrate 11. The photo-curable insulating resist 52 is, for example, organic resin such as acrylic resin or epoxy-based resin.

Then, as illustrated in Fig. 13C, an insulating layer 54 is formed by photolithography. In this case, by patterning the photo-curable insulating resist 52 using a photolithography method, the insulating layer 54 (resist pattern) that has trenches 54a is formed. The trenches 54a have a plane-shape pattern corresponding to the antenna wiring 21, the antenna interconnection wiring 22, and the dummy wiring 30a. In this process, the insulating layer 54 is formed in such a way as to expose the conductive layer 51 corresponding to the antenna wiring 21, the antenna interconnection wiring 22, and the dummy wiring 30a.

The trenches 54a can be formed using an imprint method, without being limited to the above, in the surface of the insulating layer 54. In this case, a transparent imprinting mold that has convex portions corresponding to the trenches 54a is prepared, the mold is brought close to the substrate 11, and the photo-curable insulating resist 52 is spread between the mold and the substrate 11. Next, light is applied from the mold side to cure the photo-curable insulating resist 52, thereby forming the insulating layer 54. As a result, the trenches 54a having a convex-pattern-transferred shape are formed. The insulating layer 54 having a cross-sectional structure illustrated in Fig. 13C can be obtained by thereafter separating the mold away from the insulating layer 54. Though not illustrated, it could happen that the residues of the insulating material remain on the bottom of the trenches 54a of the insulating layer 54. Therefore, the residues of the insulating material are removed by a wet process using a permanganate solution or N-methyl-2-pyrrolidone or a dry process using oxygen plasma. By removing the residues of the insulating material in this way, it is possible to form the trenches 54a exposing the conductive layer 51 as illustrated in Fig. 13C.

Next, as illustrated in Fig. 13D, the trenches 54a of the insulating layer 54 are filled with a conductor 55. In the present embodiment, the trenches 54a of the insulating layer 54 are filled with copper using an electroplating method, with the conductive layer 51 serving as a seed layer.

Next, as illustrated in Fig. 13E, the insulating layer 54 is removed. In this case, the insulating layer 54 over the substrate 11 is removed by a wet process using a permanganate solution, N-methyl-2-pyrrolidone, an acid solution, or an alkaline solution or a dry process using oxygen plasma.

After that, as illustrated in Fig. 13F, the conductive layer 51 on the front surface of the substrate 11 is removed. In this process, the conductive layer 51 is etched away in such a way as to expose the front surface of the substrate 11 by performing a wet process using a hydrogen peroxide water solution. In this way, the wiring board 10, which includes the substrate 11 and includes the antenna pattern area 20 and the dummy pattern area 30 that are arranged on the substrate 11, can be obtained. In this case, the antenna pattern area 20 includes the antenna wiring 21 and the antenna interconnection wiring 22, and the dummy pattern area 30 includes the dummy wiring 30a. The conductor 55 mentioned above includes the antenna wiring 21, the antenna interconnection wiring 22, and the dummy wiring 30a.

Then, the wiring board 10 is mounted to the first base substrate 96 framed in the rim 92 of the frame 91, thereby obtaining the HMD 90 illustrated in Fig. 1. The wiring board 10 may be mounted to the first base substrate 96 before the first base substrate 96 is put into the rim 92 of the frame 91.

### [Operational Effects of Present Embodiment]

Next, the operational effects of the HMD 90 having the configuration described above will now be explained.

As illustrated in Fig. 2, the wiring board 10 is integrated as a component of the display device 95 in the HMD 90. The antenna pattern area 20 of the wiring board 10 is electrically connected to the wireless communication circuit 94a of the HMD 90 via the power feeding portion 40. By this means, it is possible to transmit and receive a radio wave having a predetermined frequency via the antenna pattern area 20 and perform communication using the HMD 90. Since each dummy pattern area 30 is isolated from, and is electrically independent of, the antenna pattern area 20, there is no risk that the presence of each dummy pattern area 30 will affect the transmission and reception of a radio wave.

According to the present embodiment, in the HMD 90, the wiring board 10 includes the substrate 11 that has transparency and the antenna pattern area 20 arranged on the substrate 11 and including pieces of antenna wiring 21; therefore, sufficient transparency of the wiring board 10 is ensured. Therefore, the wearer is able to see the outside world through the openings 23 of the antenna pattern area 20 when the wiring board 10 has been integrated in the HMD 90; consequently, outside-world viewability is not impaired.

Moreover, since the wiring board 10 includes the antenna pattern area 20 including the pieces of antenna wiring 21, it is possible to make the HMD 90 smaller in size and lighter in weight as compared with a case where an antenna is mounted on the frame 91 of the HMD 90. Furthermore, since the display device 95 mounted to the frame 91 includes the wiring board 10, it is possible to make radio sensitivity of the HMD 90 higher than in a case where an antenna is mounted on the frame 91 of the HMD 90.

In addition, according to the present embodiment, in a front view of the HMD 90 (that is, when viewed in the thickness direction of the substrate 11), the antenna pattern area 20 and the display unit 97 are shifted in position from each other. In other words, the antenna pattern area 20 is provided at a position where it does not overlap with the display unit 97 in a front view of the HMD 90. This makes it possible to improve the viewability of the display unit 97. Moreover, since the antenna pattern area 20 and the display unit 97 are shifted in position from each other in a front view of the HMD 90, it is possible to enhance the performance of the antenna pattern area 20 serving as an antenna. That is, since it is possible to make the distance between the antenna pattern area 20 and the display unit 97, which is conductive, longer, it is possible to prevent or reduce an adverse effect on radio-wave transmission and reception.

Furthermore, according to the present embodiment, the antenna pattern area 20 is provided at a position closer to the frame 91 than the display unit 97 is. This makes it easier to connect the antenna pattern area 20 to the wireless communication circuit 94a provided in the frame 91.

Furthermore, according to the present embodiment, the wiring board 10 further includes the dummy pattern area 30 that is located around the antenna pattern area 20 and is electrically independent of the antenna wiring 21. Since the dummy pattern area 30 is located around the antenna pattern area 20 as described here, it is possible to make the boundary between the antenna pattern area 20 and the other area obscure. This makes it possible to make the antenna pattern area 20 in the display device 95 more invisible and make it harder for the wearer of the HMD 90 to notice the antenna pattern area 20 with the naked eye.

### (Modification Examples)

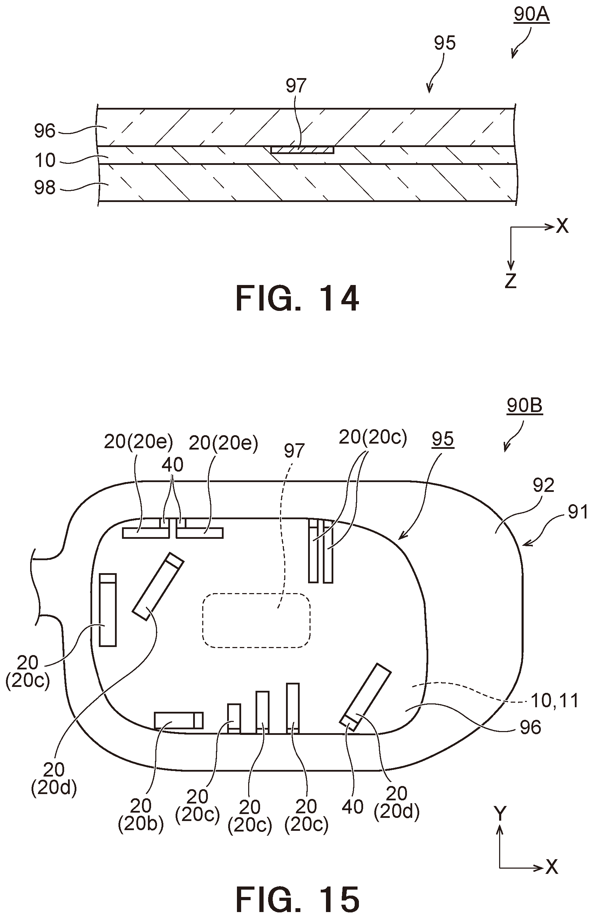

Next, with reference to Figs. 14 to 18, various modification examples of the HMD will now be described. Figs. 14 to 18 are diagrams illustrating various modification examples of the HMD. In Figs. 14 to 18, the same reference signs are assigned to portions that are the same as those of the embodiment illustrated in Figs. 1 to 13F, and a detailed explanation of them will not be given below.

### (First Modification Example)

Fig. 14 illustrates an HMD 90A according to a first modification example. In Fig. 14, the display device 95 may further include a second base substrate 98 provided on the wiring board 10 and, with the first base substrate 96, sandwiching the wiring board 10 therebetween. The same material as the material of the first base substrate 96 or similar thereto can be used as the material of the second base substrate 98. Any material that has transparency in the spectrum of visible light suffices.

Since the display device 95 further includes the second base substrate 98 provided on the wiring board 10 and sandwiching the wiring board 10 between itself and the first base substrate 96, even if the HMD 90A comes into contact with an ambient structural object or with someone else, it is possible to prevent the wiring board 10 from coming into contact with the ambient structural object, etc., or reduce the risk thereof. Therefore, it is possible to prevent the breaking of antenna wiring 21 of the antenna pattern area 20 of the wiring board 10, or reduce the risk thereof, more effectively.

### (Second Modification Example)

Fig. 15 illustrates an HMD 90B according to a second modification example. In Fig. 15, there may be a plurality of antenna pattern areas 20 on the substrate 11, and the antenna pattern areas 20 may have functions different from one another.

In the HMD 90B illustrated in Fig. 15, plural antenna pattern areas 20 (20b to 20e) are arranged on the substrate 11. In this case, the longer-side direction of some antenna pattern areas 20 and the longer-side direction of some other antenna pattern areas 20 are different in orientation from each other. Specifically, among the plurality of antenna pattern areas 20, the longer-side direction of some antenna pattern areas 20 (20b, 20c) is parallel to the X direction or the Y direction. In this case, for example, the antenna pattern area 20b may have a gesture sensing function, and the antenna pattern areas 20c may have a wireless power feeding function. The longer-side direction of some other antenna pattern areas 20 (20d) is not parallel to the X direction nor to the Y direction (inclined). In this case, for example, the antenna pattern areas 20d may have an anti-fog function. Furthermore, some antenna pattern areas 20 (20e) are arranged as a pair symmetrically with respect to a line and constitute a dipole antenna.

Since there are plural antenna pattern areas 20 on the substrate 11, and the antenna pattern areas 20 have functions different from one another, it is possible to impart various functions to the HMD 90B.

### (Third Modification Example)

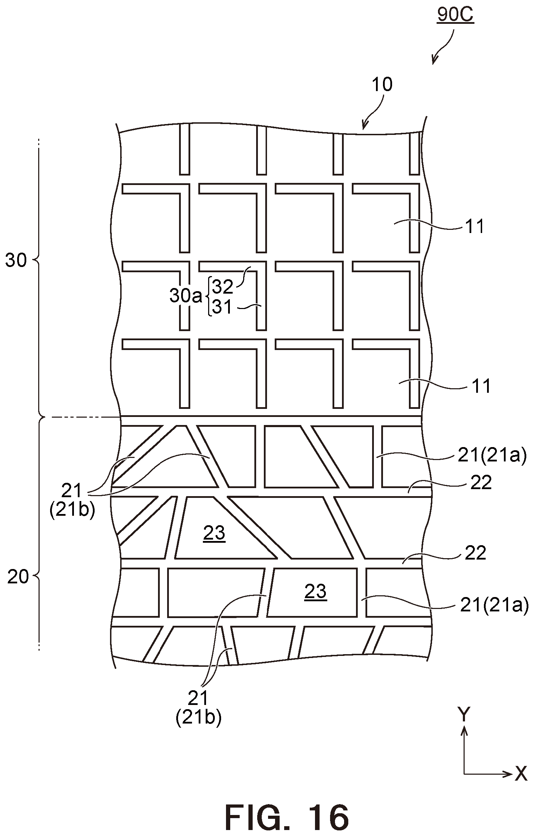

Fig. 16 illustrates an HMD 90C according to a third modification example. In Fig. 16, at least a part of pieces of antenna wiring 21 may be arranged irregularly.

In the HMD 90C illustrated in Fig. 16, the longer-side direction of a part of pieces of antenna wiring 21 and the longer-side direction of another part of the pieces of antenna wiring 21 are different in orientation from each other. Specifically, among the pieces of antenna wiring 21, the longer-side direction of some pieces of the antenna wiring 21 (21a) is parallel to the Y direction. The longer-side directions of some other pieces of the antenna wiring 21 (21b) are not parallel to the X direction nor to the Y direction (inclined).

As described above, since at least a part of the pieces of antenna wiring 21 is arranged irregularly, it is possible to prevent the occurrence of an optical streak phenomenon (a phenomenon that streaks of light are visible) caused by interference of light reflected by the antenna wiring 21 of the wiring board 10, or reduce the risk thereof.

### (Fourth Modification Example)

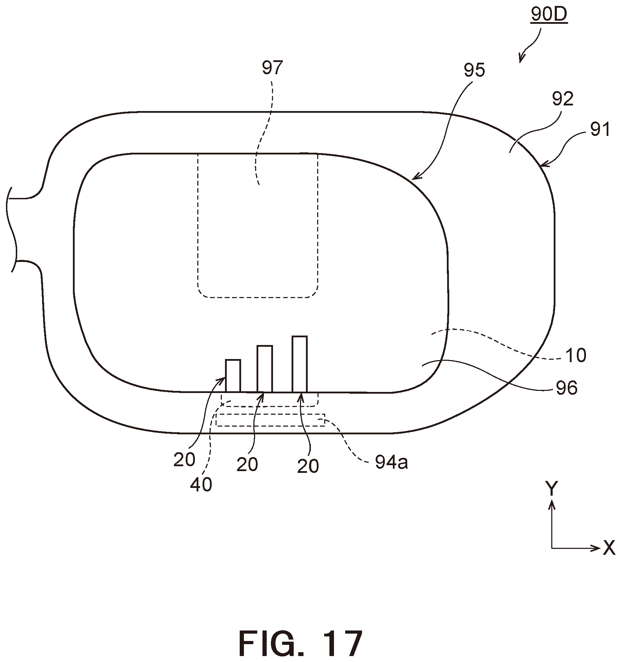

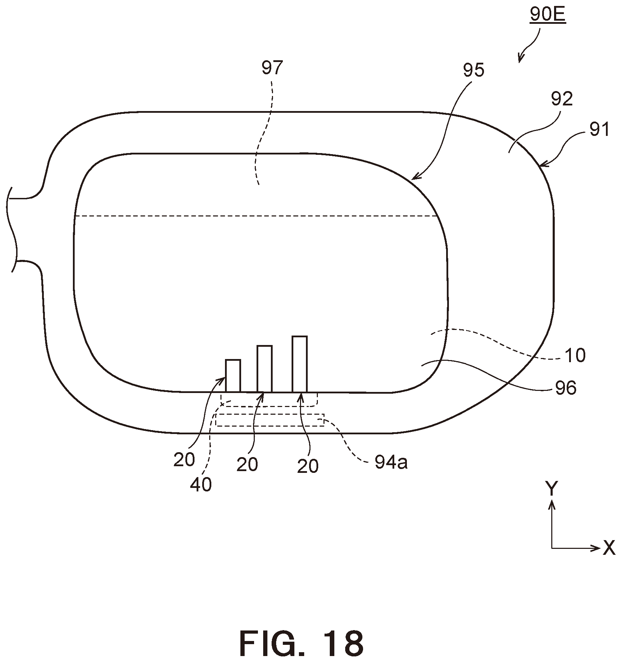

Fig. 17, 18 illustrates an HMD 90D, 90E according to a fourth modification example. In Figs. 17 and 18, the display unit 97 is provided in such a way as to reach the rim 92 of the frame 91 in a front view of the HMD 90D, 90E (that is, when viewed in the thickness direction of the substrate 11).

In this case, as illustrated in Fig. 17, the display unit 97 may be provided at a position of overlapping with a substantially center portion of the first base substrate 96 in a front view of the HMD 90D and extend in the Y direction. There is a case where wiring (not illustrated) for controlling the display unit 97 is provided in the HMD 90. In this case, there is a possibility that the wiring for controlling the display unit 97 might be positioned in such a way as to extend from the display unit 97 to the outside of the display unit 97. According to this modification example, even if the wiring for controlling the display unit 97 is provided in the HMD 90, it is possible to conceal the wiring by the frame 91. Therefore, it is possible to enhance outside-world viewability.

As illustrated in Fig. 18, the display unit 97 may extend along an inner edge of the rim 92 of the frame 91. In the illustrated example, the display unit 97 extends in the X direction along the inner edge of the rim 92. The display unit 97 may be provided at a position of not overlapping with a substantially center portion of the first base substrate 96 in a front view of the HMD 90E. In this case, it is possible to enhance outside-world viewability. Though not illustrated, the display unit 97 may extend in the Y direction along the inner edge of the rim 92.

### (Fifth Modification Example)

Moreover, although it has been described in the foregoing embodiment that the antenna pattern area 20 is provided at a position where it does not overlap with the display unit 97 when viewed in the thickness direction of the substrate 11, this is a non-limiting example. Though not illustrated, for example, the antenna pattern area 20 is may be provided at a position where it overlaps with the display unit 97 when viewed in the thickness direction of the substrate 11.

### (Sixth Modification Example)

Furthermore, although it has been described in in the foregoing embodiment that the wiring board 10 further includes the dummy pattern area 30 that is located around the antenna pattern area 20 and is electrically independent of the antenna wiring 21, this is a non-limiting example. For example, the wiring board 10 does not necessarily have to include the dummy pattern area 30 that is electrically independent of the antenna wiring 21, though not illustrated.

Plural elements disclosed in the foregoing embodiment and the modification examples can be combined as appropriate, where necessary. Alternatively, some elements may be deleted from among all of the elements disclosed in the foregoing embodiment and the modification examples.
The present invention further relates to the following items:

### [Item 1]

A head mounted display, comprising:
a frame; and
a display device mounted to the frame, the display device being transparent and including
   a first base substrate,
   a wiring board provided on the first base substrate, and
   a display unit provided between the first base substrate and the wiring board,
      the wiring board including
      a substrate having transparency, and
      a wiring pattern area arranged on the substrate and including pieces of wiring.

### [Item 2]

The head mounted display according to item 1, wherein
the display device further includes a second base substrate provided on the wiring board and, with the first base substrate, sandwiching the wiring board therebetween.

### [Item 3]

The head mounted display according to item 1 or 2, wherein
the wiring pattern area and the display unit are shifted in position from each other when viewed in a thickness direction of the substrate.

### [Item 4]

The head mounted display according to any of items 1 to 3, wherein
the wiring pattern area is provided at a position closer to the frame than the display unit is.

### [Item 5]

The head mounted display according to any of items 1 to 4, wherein
the wiring pattern area has at least one of a radio-wave transmitting-and-receiving function, a gesture sensing function, a wireless power feeding function, and an anti-fog function.

### [Item 6]

The head mounted display according to item 5, wherein
each as the wiring pattern area, a plurality of wiring pattern areas exists on the substrate, and
the wiring pattern areas have functions different from one another.

### [Item 7]

The head mounted display according to any of items 1 to 6, wherein
at least a part of the pieces of wiring is arranged irregularly.

### [Item 8]

The head mounted display according to any of items 1 to 7, wherein
the substrate includes glass or a resin film.

### [Item 9]

The head mounted display according to any of items 1 to 8, wherein
the wiring board further includes a dummy pattern area that is located around the wiring pattern area and is electrically independent of the wiring.

### [Item 10]

The head mounted display according to any of items 1 to 9, wherein
the wiring pattern area has a sheet resistance value of 5 ohms per square or less, and a maximum width is 3 µm or less when each of the pieces of wiring is viewed at a viewing angle of 120°.

## Claims

1. A head mounted display (90), comprising:
a frame (91); and
a display device (95) mounted to the frame (91), the display device (95) being transparent and including
a first base substrate (96),
a wiring board (10) provided on the first base substrate (96), and
a display unit (97) provided between the first base substrate (96) and the wiring board (10),
the wiring board (10) including
a substrate (11) having transparency, and
a wiring pattern area (20) arranged on the substrate (11) and including pieces of wiring (21),
wherein the minimum distance (D) between the wiring pattern area (20) and the display unit (97) is 0.1 mm or greater.

2. The head mounted display (90) according to claim 1, wherein
the wiring pattern area (20) and the display unit (97) are shifted in position from each other when viewed in a thickness direction of the substrate (11).

3. The head mounted display (90) according to claim 1 or 2, wherein
the display device (95) further includes a second base substrate (98) provided on the wiring board (10) and, with the first base substrate (96), sandwiching the wiring board (10) therebetween.

4. The head mounted display (90) according to any of claims 1 to 3, wherein
the wiring pattern area (20) is provided at a position closer to the frame (91) than the display unit (97) is.

5. The head mounted display (90) according to any of claims 1 to 4, wherein
the wiring pattern area (20) has at least one of a radio-wave transmitting-and-receiving function, a gesture sensing function, a wireless power feeding function, and an anti-fog function.

6. The head mounted display (90) according to claim 5, wherein
each as the wiring pattern area (20), a plurality of wiring pattern areas (20) exists on the substrate (11), and
the wiring pattern areas (20) have functions different from one another.

7. The head mounted display (90) according to any of claims 1 to 6, wherein
at least a part of the pieces of wiring (21) is arranged irregularly.

8. The head mounted display (90) according to any of claims 1 to 7, wherein
the substrate (11) includes glass or a resin film.

9. The head mounted display (90) according to any of claims 1 to 8, wherein
the wiring board (10) further includes a dummy pattern area (30) that is located around the wiring pattern area (20) and is electrically independent of the wiring (21).

10. The head mounted display (90) according to any of claims 1 to 9, wherein
the wiring pattern area (20) has a sheet resistance value of 5 ohms per square or less, and a maximum width is 3 µm or less when each of the pieces of wiring (21) is viewed at a viewing angle of 120°.
